# EUROPEAN PATENT SPECIFICATION

(11) **EP 3 424 672 B1**
(45) Date of publication and mention of the grant of the patent: **10.03.2021**
(21) Application number: 16892720.0
(22) Date of filing: 07.12.2016
(51) Int. Cl.: B29C 45/27

(54) **SPRUE BUSH**
ANGUSSBUCHSE
BUSE DE MOULE

(30) Priority: 29.02.2016 JP 2016036549
(43) Date of publication of application: 09.01.2019
(73) Proprietor: Pla Moul Seiko Co., Ltd., Miyagi 981-3351 (JP)
(72) Inventor: WAKIYAMA, Takashi, Kurokawa-gun Miyagi 981-3351 (JP)
(74) Representative: FDST Patentanwälte
(86) International application number: PCT/JP2016/086345
(87) International publication number: WO 2017/149885

(56) References cited:
- EP-A2- 0 311 875
- JP-A- H0 524 080
- JP-A- H11 170 307
- JP-A- 2000 006 200
- JP-A- 2000 141 419
- JP-A- 2000 141 419
- JP-A- 2004 066 563
- JP-A- 2006 068 956
- JP-A- 2007 237 485
- JP-A- 2007 283 503
- JP-A- 2013 075 504
- KR-A- 20120 105 986
- US-A- 4 069 003
- US-A1- 2009 017 155

## Description

### TECHNICAL FIELD

The present invention relates to a sprue bush that is attached to a mold used to mold synthetic resin, and a bush component attached thereto.

### BACKGROUND ART

In an example of a synthetic resin molding process implemented when injection-molding synthetic resin, a pair of molds are closed such that a cavity is formed therebetween, and molten synthetic resin is injected into the cavity. A sprue bush is a member having a flow passage (a sprue) through which synthetic resin injected from an injection molding machine is injected into the molds, and the sprue bush is attached interchangeably to the mold on the side where the synthetic resin is injected. An injection nozzle of the injection molding machine is then brought into direct contact with a nozzle contact surface of the sprue bush, whereupon the synthetic resin is injected. During the injection molding, the high-temperature, molten resin material is injected into the cavity through the sprue of the sprue bush and a runner provided in the molds, and by advancing a mold release timing, a molding cycle time can be shortened, leading to enhancement in productivity. However, when the molds are released before the resin in a sprue inlet portion hardens, stringing occurs. When, as a result, a string is trapped in a mold, problems such as variation in the shape of the mold and deterioration of the quality of a molded article occur.

In response to the problem of stringing, as described above, it has been proposed that stringing may be prevented by implementing heat diffusion in the sprue bush serving as the resin flow passage. More specifically, providing a partition plate that bisects a flow passage cross-section (an opening in the nozzle contact surface) in a resin injection port of the sprue bush (Patent Document 1), forming the opening (the flow passage cross-section) in a shape other than a circular shape, such as a six-pronged fork shape (Patent Document 2), forming the entire sprue bush from a high thermal conductivity member made of copper alloy, copper, aluminum alloy, aluminum, or the like (Patent Document 3), and embedding a high thermal conductivity member in a sprue bush main body as a component thereof (Patent Document 4) have been disclosed.

JP 2007 237485 A describes a nozzle and a sprue bush joint structure and providing an adaptor between the nozzle and the sprue bush. The adaptor is held by a holder and is having a passage for molten resin. The passage might be in the form of an H-shaped hole.

JP 2007 283503 A describes a sprue bush having an outer tube and an inner tube with a cooling channel formed between the tubes. The inner tube defining an insert having a concave curved portion for contacting a nozzle.

US 2009/017155 A1 describes an apparatus for injection molding including a nozzle. The nozzle having a flat first end surface with protrusions formed on it. A sprue bush is provided with a complementary design having a flat second end surface with recesses.

### CITATION LIST

### PATENT LITERATURE

Patent Document 1: Japanese Laid-open Patent Publication No. 2001-246649
Patent Document 2: Japanese Laid-open Patent Publication No. 2008-247014
Patent Document 3: Japanese Laid-open Patent Publication No. 2007-083462
Patent Document 4: Japanese Laid-open Patent Publication No. 2014-046537

### SUMMARY OF INVENTION

### PROBLEMS TO BE SOLVED BY THE INVENTION

However, in the method of Patent Document 1, the sprue cross-section through which the resin flows is obstructed by the partition plate, and therefore the fluidity of the resin deteriorates. It is therefore needed to take measures such as increasing the injection pressure, increasing the temperature of the resin in order to reduce the viscosity thereof, and reducing the cross-section of the partition plate, but as a result of these measures, deterioration of and damage to the partition plate are more likely to occur. Moreover, when a resin blockage occurs in the sprue bush, an operation to remove the resin is complicated, and therefore the partition plate may be damaged while removing the resin, leading to an increase in the frequency with which the partition plate or the entire sprue bush has to be exchanged for a new one.

It is known that by employing the method of Patent Document 2, a greater stringing suppression effect than that obtained with a circular cross-section can be realized, but under present circumstances, when even greater yield is needed, the effect is insufficient.

In the method of Patent Document 3, a high thermal conductivity member typically exhibits lower strength and wear resistance than a conventional sprue bush material, and therefore the resin flow passage may deteriorate due to wear and deformation. When the resin flow passage deteriorates, molding conditions vary, and components have to be replaced more frequently.

Furthermore, in the method of Patent Document 4, preparing and combining a plurality of metal members having different thermal conductivity values may lead to an increase in manufacturing cost.

Hence, in consideration of the problems described above, an object of the present invention is to provide a novel sprue bush with which stringing can be prevented without the use of a partition plate or a high thermal conductivity member, and a bush component forming the sprue bush.

### MEANS FOR SOLVING THE PROBLEMS

A sprue bush attached to a mold used to mold synthetic resin is provided with the features of claim 1. The sprue bush comprising a sprue bush main body that has a flow passage, through which synthetic resin injected from an injection molding nozzle flows, and a recessed portion formed in a surface of the sprue bush main body on a synthetic resin injection port side thereof, and a bush component that is embedded in the recessed portion, the bush component including a nozzle contact surface that is contacted by the injection molding nozzle, a through hole that extends from an opening in the nozzle contact surface and communicates with the flow passage in the sprue bush main body so as to form the flow passage for the synthetic resin, and a plurality of ribs that extend radially outward from a peripheral surface of the through hole.

### ADVANTAGEOUS EFFECTS OF THE INVENTION

According to the present invention, the nozzle contact surface of the bush component is supported by the ribs, and spaces are provided between the ribs. Therefore, the plurality of radial ribs act as heat radiation fins such that the heat of the resin in the vicinity of the opening in the nozzle contact surface is radiated effectively to the spaces between the ribs. Moreover, the nozzle contact surface is reduced in thickness, thereby enhancing the effect of radiating heat from the nozzle contact surface. Hence, the vicinity of the opening is cooled with greater efficiency such that the temperature of the resin in the vicinity of the opening decreases earlier, and as a result, the occurrence of stringing is suppressed.

### BRIEF DESCRIPTION OF DRAWINGS

Figs. 1A-1E are views illustrating configurations of a sprue bush according to a first embodiment not covered by claim 1.
Figs. 2A-2F are views illustrating configurations of the bush component 20 according to the first embodiment.
Figs. 3A-3F are views illustrating modified examples of the configuration of the bush component 20 according to the first embodiment.
Figs. 4A-4F are views illustrating modified examples of the configuration of the bush component 20 according to the first embodiment.
Figs. 5A-5F are views illustrating modified examples of the configuration of the bush component 20 according to the first embodiment.
Figs. 6A-6F are views illustrating modified examples of the configuration of the bush component 20 according to the first embodiment.
Figs. 7A-7F are views illustrating modified examples of the configuration of the bush component 20 according to the first embodiment.
Figs. 8A-8E are views illustrating configurations of a sprue bush according to a second embodiment not covered by claim 1.
Figs. 9A-9F are views illustrating configurations of the bush component 20 according to the second embodiment.
Figs. 10A-10F are views illustrating modified examples of the configuration of the bush component 20 according to the second embodiment.
Figs. 11A-11F are views illustrating modified examples of the configuration of the bush component 20 according to the second embodiment.
Figs. 12A-12F are views illustrating modified examples of the configuration of the bush component 20 according to the second embodiment.
Figs. 13A-13F are views illustrating modified examples of the configuration of the bush component 20 according to the second embodiment.
Figs. 14A-14F are views illustrating modified examples of the configuration of the bush component 20 according to the second embodiment.
Figs. 15A-15D are views illustrating further examples of the configuration of the bush component 20 according to an embodiment of the present invention.
Fig. 16 is a sectional view illustrating a condition in which an injection molding nozzle 30 contacts the nozzle contact surface of the bush component 20 illustrated in Figs. 15A-15D.

### DESCRIPTION OF EMBODIMENTS

Different Embodiments of a sprue bush and of a bush component will be described below with reference to the figures.

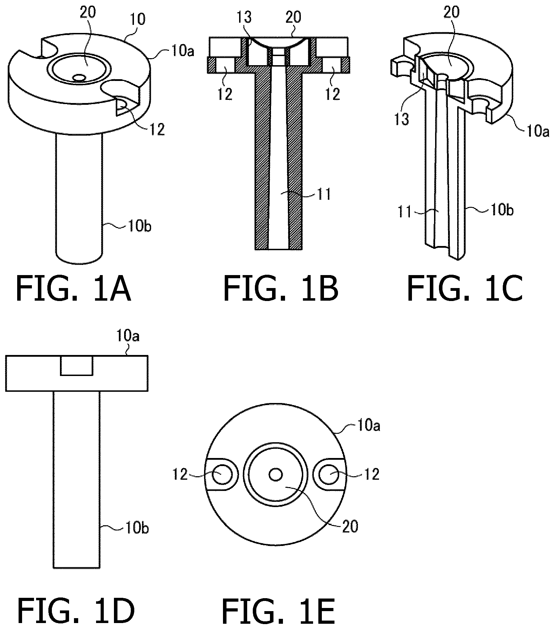

Figs. 1A-1E are views illustrating configurations of a sprue bush according to a first embodiment, wherein Fig. 1A is an external perspective view, Fig. 1B is a sectional view, Fig. 1C is a sectional perspective view, Fig. 1D is a side view, and Fig. 1E is a top view. The sprue bush according to the first embodiment is configured to include a sprue bush main body 10, and a bush component 20 that is attached to the sprue bush main body 10.

The sprue bush main body 10 is formed from a steel material having a sufficient hardness to satisfy performance necessities such as wear resistance and durability, and is formed by coaxially integrating a disc-shaped head 10a and a columnar shaft 10b having a smaller diameter than the head 10a. A sprue (a flow passage) 11 through which molten resin injected from an injection nozzle (not illustrated) flows is formed in an axial center that extends from the head 10a to the shaft 10b. Further, a pair of screw holes 12 are provided in the head 10a, and the sprue bush main body 10 is attached fixedly to a mold by fixing screws through the screw holes 12. Furthermore, a recessed portion 13 having a columnar shape, for example, is formed in a central portion of the head 10a of the sprue bush main body 10, and the bush component 20 is embedded in the recessed portion 13.

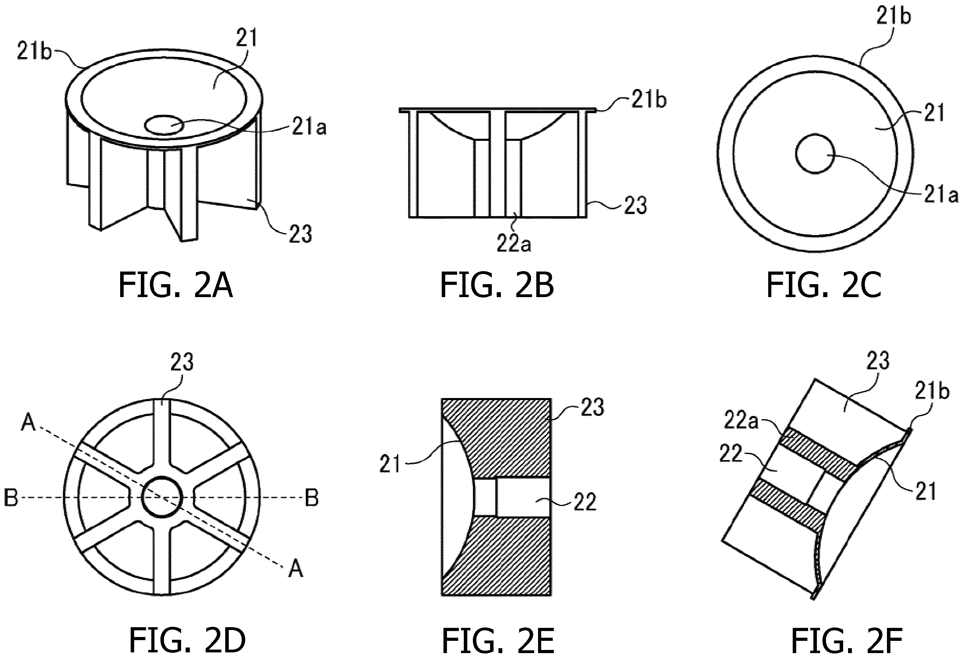

Figs. 2A-2F are views illustrating configurations of the bush component 20 according to the first embodiment, wherein Fig. 2A is an external perspective view, Fig. 2B is a side view, Fig. 2C is a top view, Fig. 2D is a bottom view, Fig. 2E is an A-A sectional view of Fig. 2D, and Fig. 2F is a B-B sectional view of Fig. 2D.

The bush component 20, similarly to the sprue bush main body 10, is formed from a steel material having a predetermined hardness, and the type of steel material may be identical or different to that of the sprue bush main body 10. The bush component 20 is shaped to fit into the recessed portion 13, and is configured to include a nozzle contact surface 21 that is contacted by the injection molding nozzle, a through hole 22 that extends from an opening 21a in a bottom center of the nozzle contact surface 21 and communicates with the sprue 11 of the sprue bush main body 10 so as to form a synthetic resin flow passage (a sprue), and a plurality of ribs 23 that extend radially outward from a pipe-shaped portion 22a forming the through hole 22. In the example of Fig. 2, the opening 21a is circular and the through hole 22 has a circular cross-section. The bush component 20 can be manufactured using an existing processing technique such as cutting or electrical discharge machining.

The ribs 23 are rectangular thin plate portions, and are provided to extend from the pipe-shaped portion 22a at equal intervals in a circumferential direction. In the example of Fig. 2, six ribs 23 are formed. An axial direction length of the ribs 23 is determined such that an upper end side of each rib 23 is joined to a rear surface of the nozzle contact surface 21 and a lower end side of each rib 23 contacts a bottom of the recessed portion 13 of the head 10a (when the bush component 20 is embedded in the recessed portion 13). Further, a radial direction length of the ribs 23 is determined such that each rib 23 contacts a peripheral surface of the recessed portion 13 of the head 10a (when the bush component 20 is embedded in the recessed portion 13).

The nozzle contact surface 21 of the bush component 20 is a depressed curved surface that curves in a circular shape, and is formed at a substantially identical diameter to a tip end shape of the injection molding nozzle. The opening 21a connected to the through hole 22 is formed in the bottom center of the nozzle contact surface 21. Further, a flange 21b is formed on an outer periphery of the nozzle contact surface 21, and the ribs 23 extend to the flange 21b.

The bush component 20 is press-fitted into the recessed portion 13 in the head 10a of the sprue bush main body 10, whereupon the entire periphery of the flange 21b is laser-welded, for example, so as to be joined and fixed integrally to the head 10a of the sprue bush main body 10. At this time, the flange 21b of the nozzle contact surface 21 is flush with a front surface of the head 10a (see Fig. 1B and so on), whereby the nozzle contact surface 21 is supported by the ribs 23 and spaces provided between the ribs 23 are formed directly below the nozzle contact surface 21.

By providing a configuration in which the nozzle contact surface 21 of the bush component 20 is supported by the ribs 23 and spaces are formed between the ribs 23, the plurality of radial ribs 23 act as heat radiation fins such that the heat of the resin in the vicinity of the opening 21a in the nozzle contact surface 21 is radiated effectively to the spaces between the ribs 23. Moreover, the nozzle contact surface 21 can be reduced in thickness, thereby enhancing the effect of radiating heat from the nozzle contact surface 21. Hence, the vicinity of the opening 21a is cooled with greater efficiency such that the temperature of the resin in the vicinity of the opening 21a decreases earlier, and as a result, the occurrence of stringing is suppressed. Furthermore, by providing the radially disposed ribs 23 as a structure for supporting the nozzle contact surface 21, sufficient strength can be secured in the nozzle contact surface 21, which is contacted by the injection molding nozzle, while reducing the thickness of the nozzle contact surface 21, and therefore deterioration of the nozzle contact surface 21 can be suppressed. As a result, the durability of the sprue bush can be maintained.

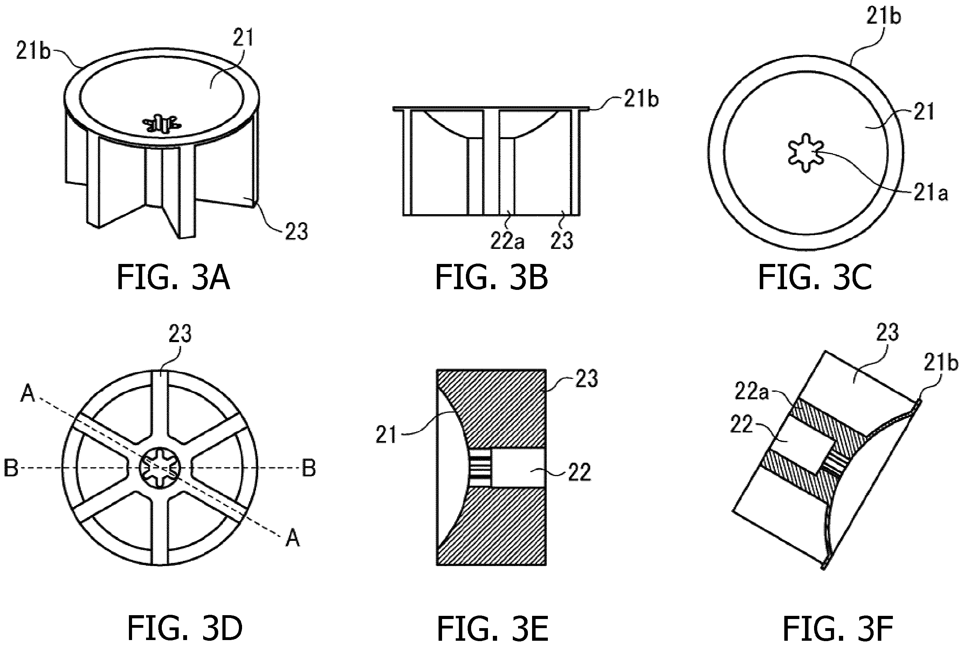

Figs. 3A-3F to 7A-7F are views illustrating modified examples of the configuration of the bush component 20 according to the first embodiment, wherein each figure A in Figs. 3 to 7 is an external perspective view, each figure B in Figs. 3 to 7 is a side view, each figure C in Figs. 3 to 7 is a top view, each figure D in Figs. 3 to 7 is a bottom view, each figure E in Figs. 3 to 7 is an A-A sectional view of each figure D in Figs. 3 to 7, and each figure F in Figs. 3 to 7 is a B-B sectional view of each figure D in Figs. 3 to 7.

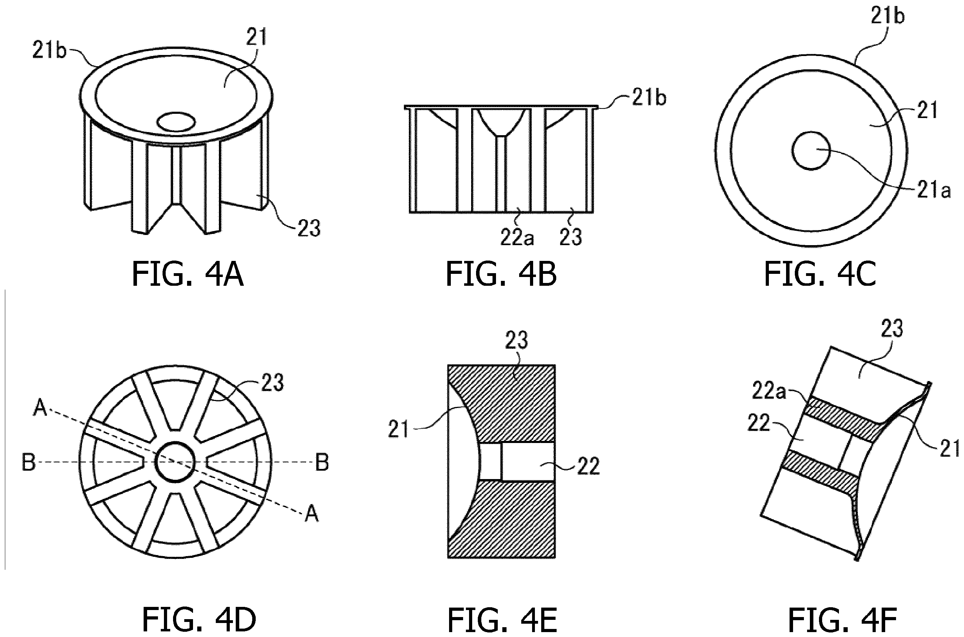

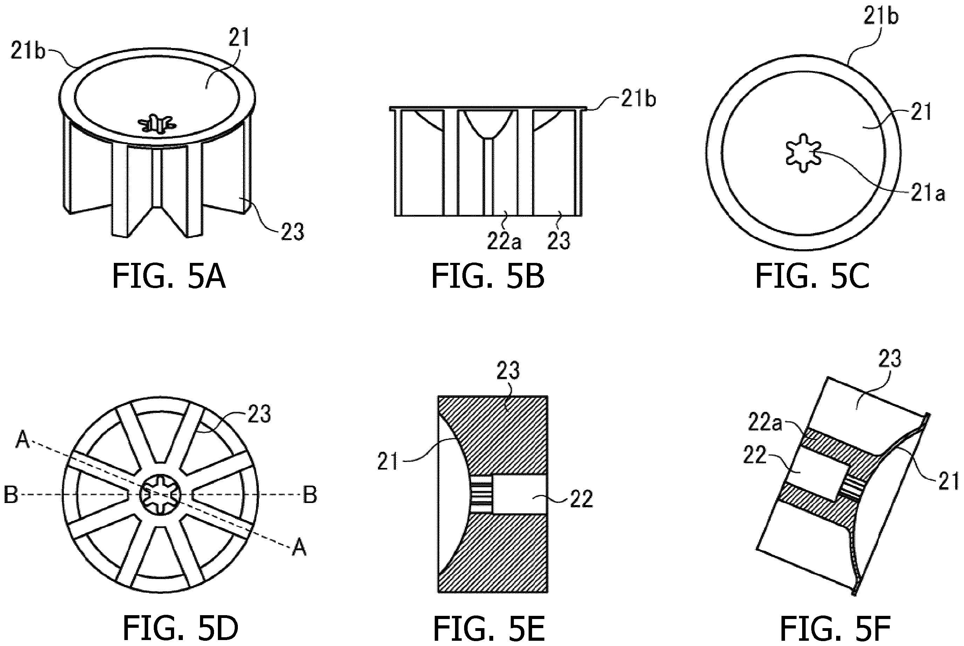

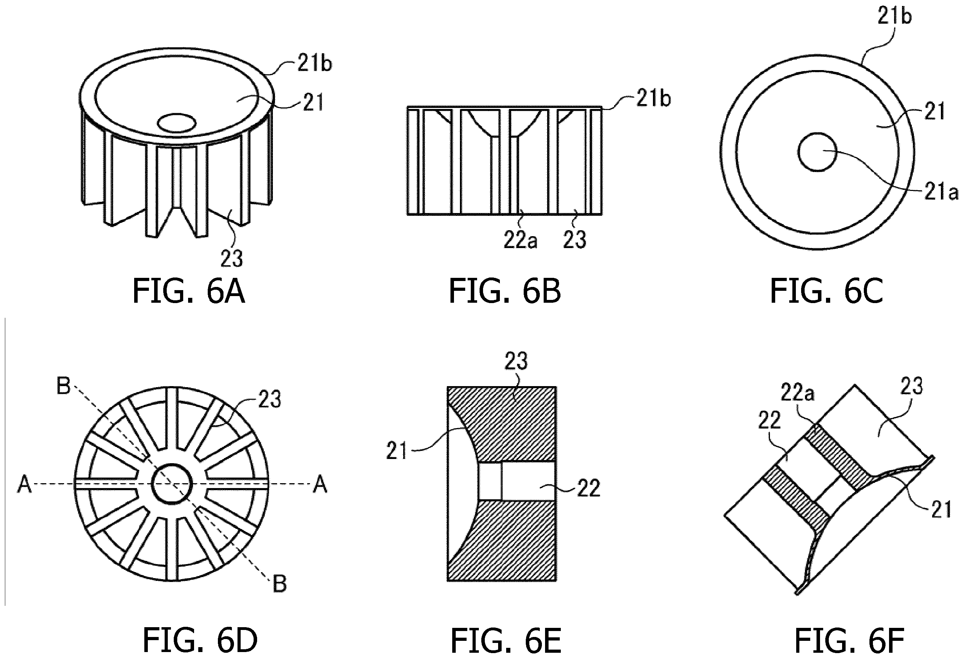

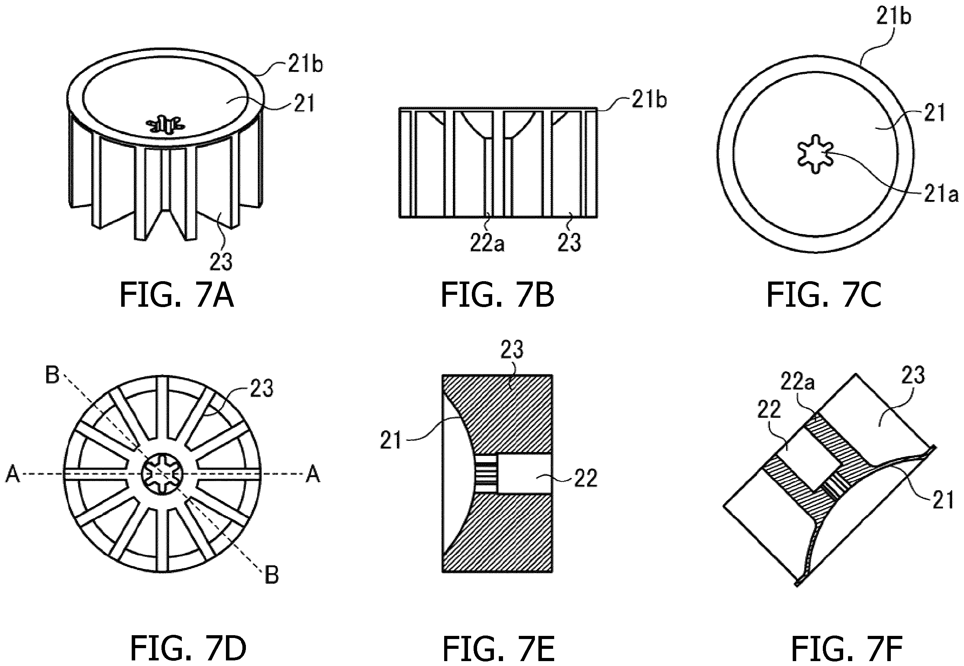

Figs. 3A-3F illustrate examples in which the number of ribs 23 is six and the through hole 22 has a six-pronged fork-shaped cross-section. Figs. 4A-4F illustrate examples in which the number of ribs 23 is eight and the through hole 22 has a circular cross-section. Figs. 5A-5F illustrate examples in which the number of ribs 23 is eight and the through hole 22 has a six-pronged fork-shaped cross-section. Figs. 6A-6F illustrate examples in which the number of ribs 23 is twelve and the through hole 22 has a circular cross-section. Figs. 7A-7F illustrate examples in which the number of ribs 23 is twelve and the through hole 22 has a six-pronged fork-shaped cross-section. The number of ribs 23 is not limited to the above examples, and another number, such as three or four, for example, may be employed, the number of ribs 23 being determined as a design matter in consideration of the thickness of the ribs 23 and the strength needed to support the thin nozzle contact surface 21. Further, as regards the sectional shape of the through hole 22, by employing a shape having a greater stringing prevention effect than a circular cross-section, such as a six-pronged fork shape, the stringing prevention effect can be enhanced. The sectional shape is not limited to a circular or six-pronged fork shape, and various other shapes, such as a star shape, for example, may be employed.

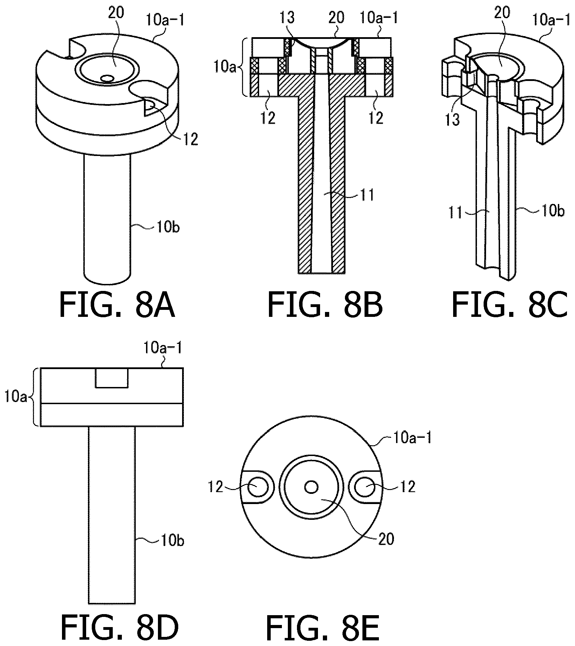

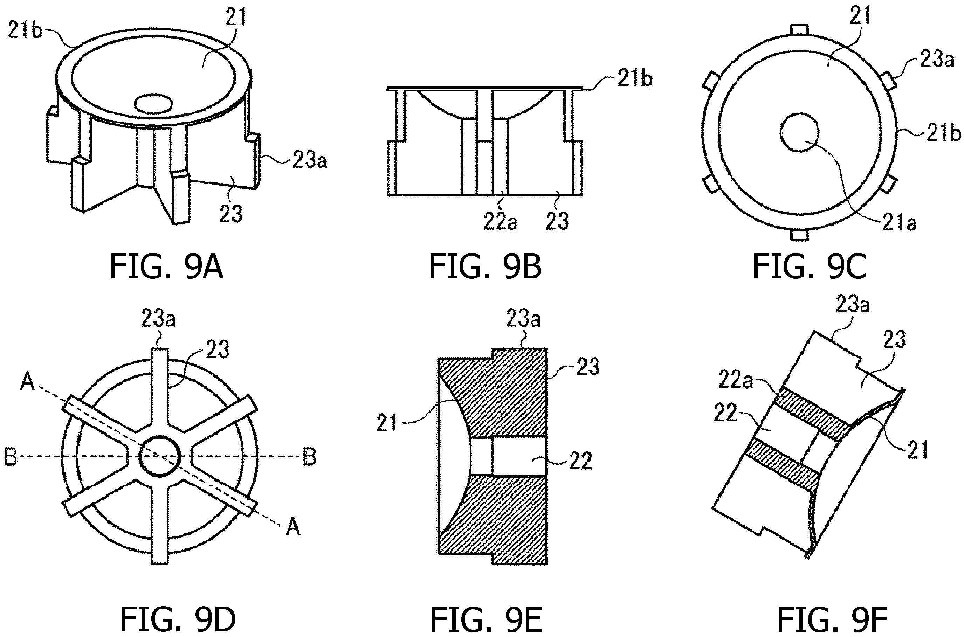

Figs. 8A-8E are views illustrating configurations of a sprue bush according to a second embodiment, and Figs. 9A-9F are views illustrating configurations of the bush component 20 according to the second embodiment. More specifically, Fig. 8A is an external perspective view of the sprue bush, Fig. 8B is a sectional view, Fig. 8C is a sectional perspective view, Fig. 8D is a side view, and Fig. 8E is a top view. Further, Fig. 9A is an external perspective view of the bush component 20, Fig. 9B is a side view, Fig. 9C is a top view, Fig. 9D is a bottom view, Fig. 9E is an A-A sectional view of Fig. 9D, and Fig. 9F is a B-B sectional view of Fig. 9D.

The sprue bush according to the second embodiment is a modified example of the sprue bush according to the first embodiment, and therefore modified parts will be described mainly below, while parts that are not described specifically are assumed to be configured identically to the sprue bush according to the first embodiment.

In the sprue bush according to the second embodiment, a ring-shaped portion (a part of the head surrounding the peripheral surface of the recessed portion 13) 10a-1 forming the peripheral surface of the recessed portion 13 in the head 10a of the sprue bush main body 10is configured as a separate component that can be detached from the sprue bush main body 10. The ring-shaped portion 10a-1 forms an outside part constituting an outer side of a side face of the recessed portion 13 of the head 10a, and serves as a part of the head 10a that is obtained by partially dividing the head 10a along a perpendicular plane to the axial direction. A height of the ring-shaped portion 10a-1 is set to match a height (a depth) of the recessed portion 13.

The ring-shaped portion 10a-1 includes a pair of screw holes 12-1 that are aligned with the screw holes 12 in the head 10a, and using screw fastenings, the ring-shaped portion 10a-1 is integrated with the head 10a of the sprue bush main body 10, thereby realizing the sprue bush main body 10 and forming the recessed portion 13 of the head 10a. The bush component 20 is fitted into a central hole in the ring-shaped portion 10a-1, which corresponds to the recessed portion 13 of the head 10a. Preferably, a collar 23a is provided on each of the ribs 23 of the bush component 20 to ensure that the bush component 20 does not fall out of the ring-shaped portion 10a-1, and a step portion on which the collar 23a catch is provided on a peripheral surface of the central hole of the ring-shaped portion 10a-1. The bush component 20 is attached to the sprue bush main body 10 by placing the bush component 20 on the head 10a of the sprue bush main body 10 in a condition where the ring-shaped portion 10a-1 is not attached, and then screwing the ring-shaped portion 10a-1 to the sprue bush main body 10 so that the bush component 20 is housed in the central hole of the ring-shaped portion 10a-1. As a result, the bush component 20 is embedded fixedly in the recessed portion 13 of the sprue bush main body 10.

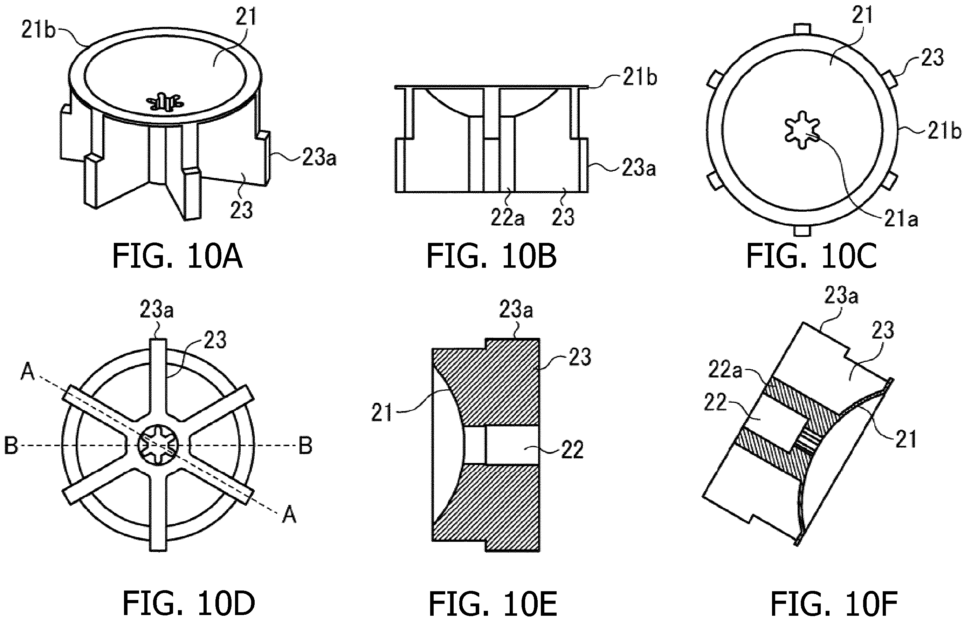

Figs. 10A-10F to 14A-14F are views illustrating modified examples of the configuration of the bush component 20 according to the second embodiment, wherein Figs. 10A, 11A, 12A, 13A and 14A are external perspective views, Figs. 10B, 11B, 12B, 13B and 14B are side views, Figs. 10C, 11C, 12C, 13C and 14C are top views, Figs. 10D, 11D, 12D, 13D and 14D are bottom views, Figs. 10E, 11E, 12E, 13E and 14E are A-A sectional views of Figs. 10D, 11D, 12D, 13D and 14D respectively, and Figs. 10F, 11F, 12F, 13F and 14F are B-B sectional views of Figs. 10D, 11D, 12D, 13D and 14D respectively.

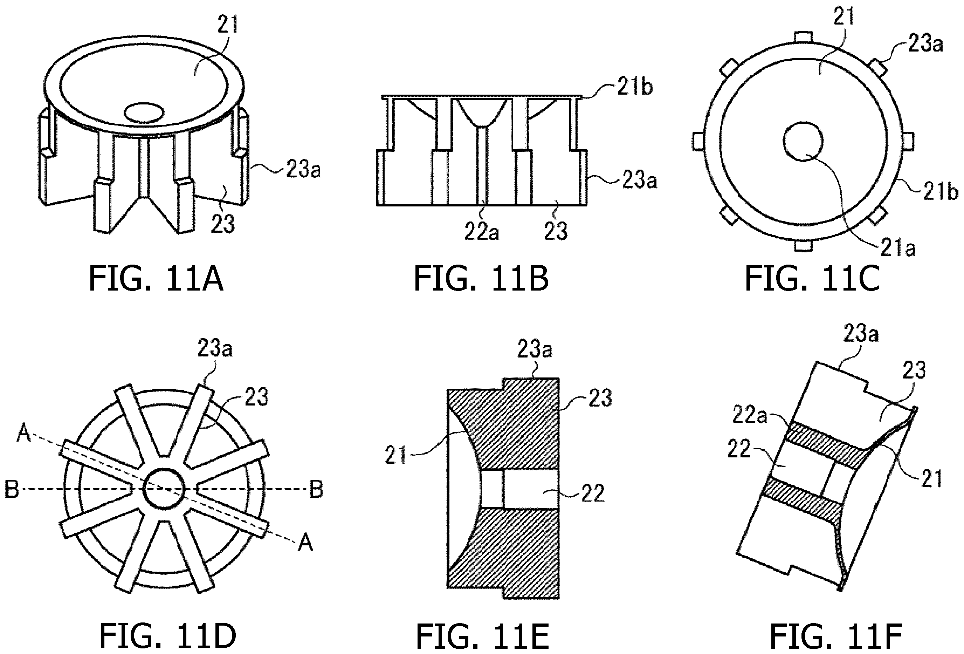

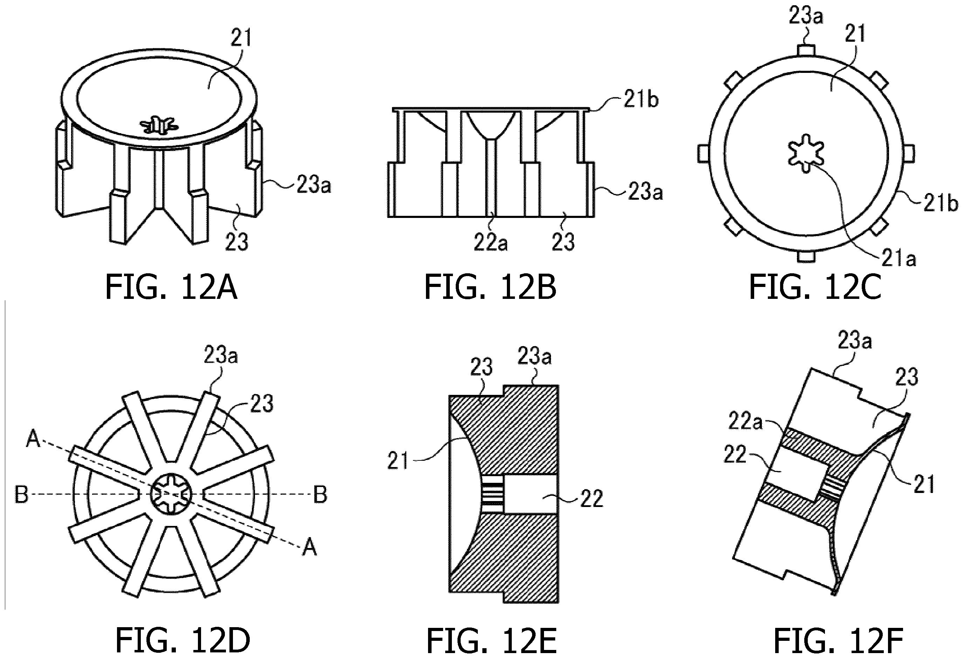

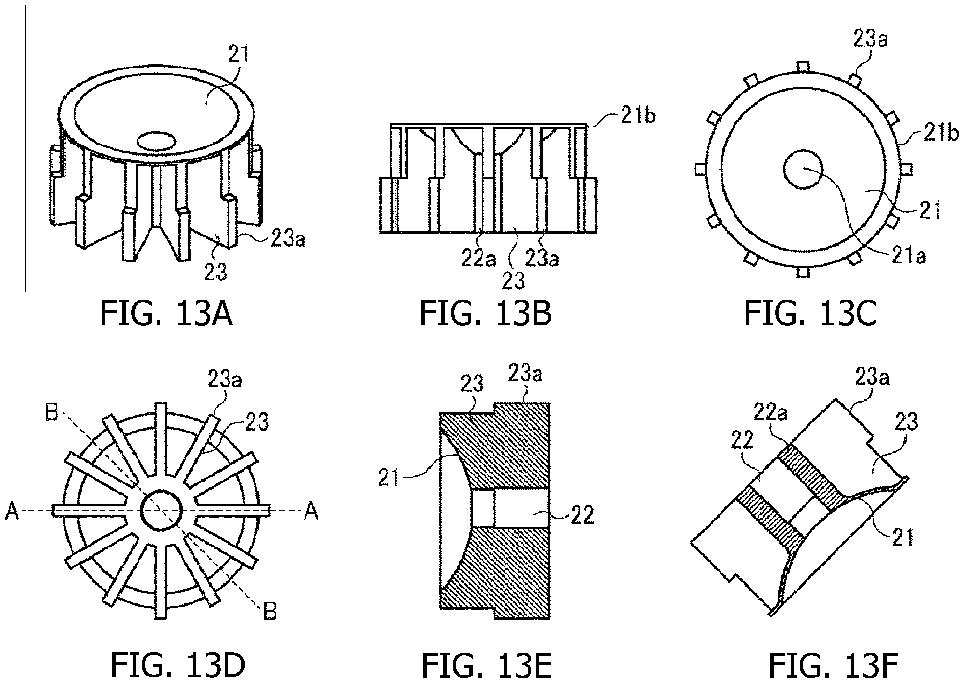

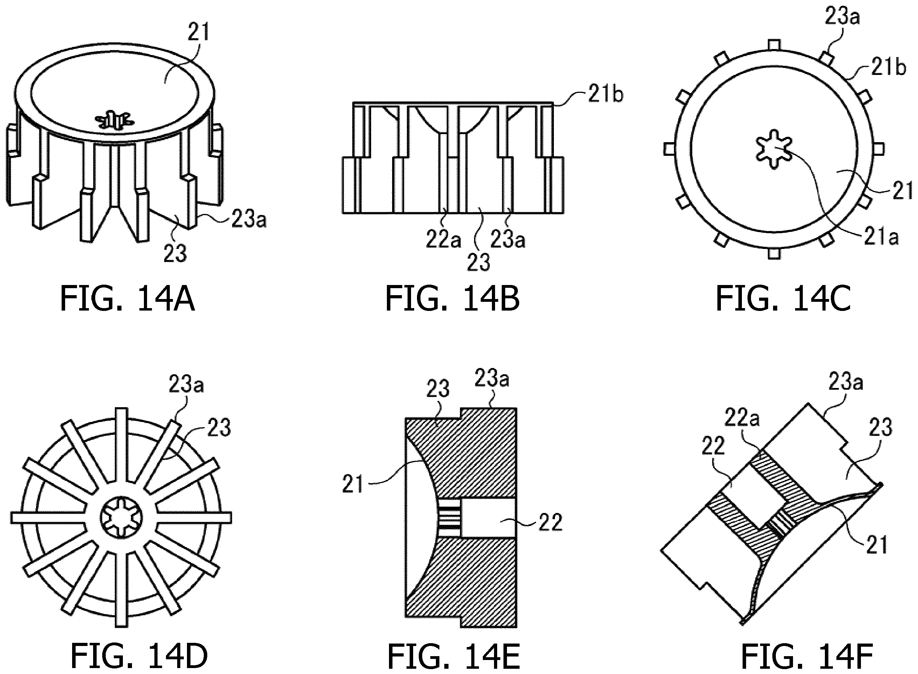

The modified examples of the configuration of the bush component 20 according to the second embodiment, illustrated in Figs. 10A-10F to 14A-14F, are identical to the modified examples of the configuration of the bush component 20 according to the first embodiment, illustrated in Figs. 3A-3F to 7A-7F, except that the ribs 23 are provided with the collar 23a. Figs. 10A-10F illustrate examples in which the number of ribs 23 is six and the through hole 22 has a six-pronged fork-shaped cross-section. Figs. 11A-11F illustrate examples in which the number of ribs 23 is eight and the through hole 22 has a circular cross-section. Figs. 12A-12F illustrate examples in which the number of ribs 23 is eight and the through hole 22 has a six-pronged fork-shaped cross-section. Figs. 13A-13F illustrate examples in which the number of ribs 23 is twelve and the through hole 22 has a circular cross-section. Figs. 14A-14F illustrate examples in which the number of ribs 23 is twelve and the through hole 22 has a six-pronged fork-shaped cross-section.

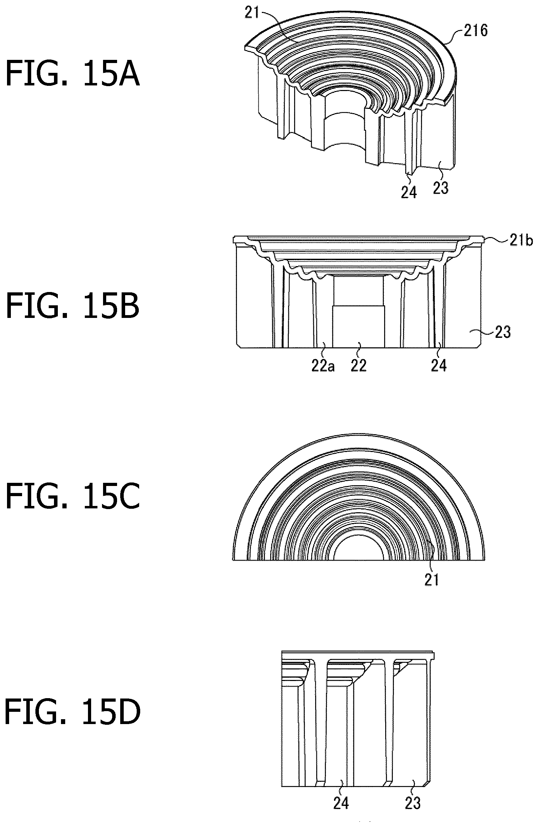

Figs. 15A-15D are views illustrating further modified examples of the configuration of the bush component 20 according to an embodiment of the present invention. Fig. 15A is a sectional perspective view, Fig. 15B is a sectional view, Fig. 15C is a top view (illustrating half of a surface), and Fig. 15D is a partial side view. In this further modified example of the configuration of the bush component 20, the respective bush components 20 of the first and second embodiments are configured such that the nozzle contact surface 21, which is constituted by a depressed surface that curves in a circular shape, is formed to include a plurality of concentric circle-shaped concavo-convex surfaces.

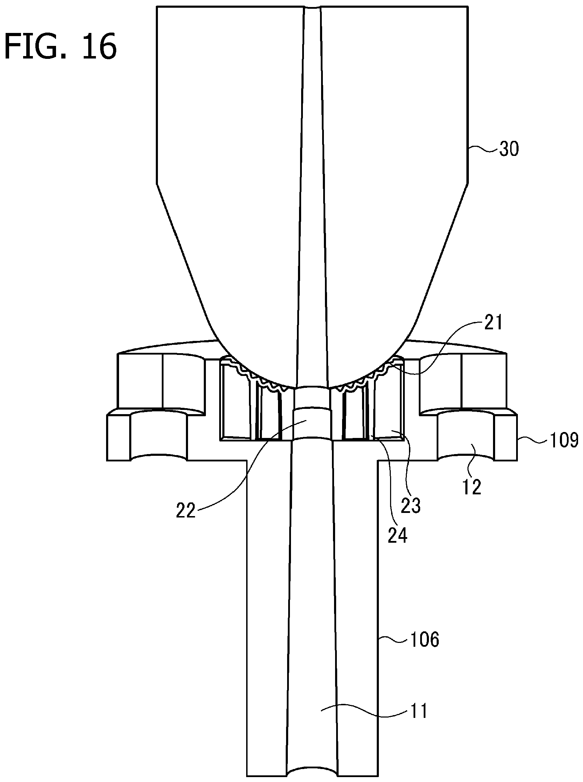

Fig. 16 is a sectional view illustrating a condition in which an injection molding nozzle 30 contacts the nozzle contact surface of the bush component 20 illustrated in Figs. 15A-15D. The injection molding nozzle 30 contacts convex portions of the concentric circle-shaped concavo-convex surfaces formed on the nozzle contact surface 21 so as to be supported by the ring-shaped lines or strip-form surfaces forming the convex portions of the concavo-convex surfaces, while ring-shaped spaces are formed between concave portions of the concentric circle-shaped concavo-convex surfaces and the injection molding nozzle 30. These ring-shaped spaces serve as heat radiation spaces from which heat is radiated from the nozzle contact surface 21. Hence, heat dissipation from the nozzle contact surface 21 is promoted, leading to enhancement in the cooling effect in the vicinity of the opening 21a, and as a result, the temperature of the resin in the vicinity of the opening 21a decreases earlier, thereby contributing to the prevention of stringing.

Further, the bush component 20 illustrated in Figs. 15A-15D is provided with a ring-shaped rib 24 in addition to the radially extending ribs 23 described above. The ring-shaped rib 24 serves as the outer periphery of the pipe-shaped portion 22a forming the through hole 22, and is provided to intersect the radial ribs 23. The ring-shaped rib 24, similarly to the radial ribs 23, is configured such that an upper end thereof is joined to the rear surface of the nozzle contact surface 21 and a lower end thereof contacts the bottom of the recessed portion 13. The ring-shaped rib 24, together with the ribs 23, provides the strength needed to support the nozzle contact surface 21, and the position and dimensions thereof are determined together with the number (the intervals between), thickness, and so on of the ribs 23 as design matters in consideration of the strength.

The shape of the nozzle contact surface 21 illustrated in Figs. 15A-15D is not limited to being applied to the nozzle contact surface of the bush component 20 according to the embodiments described above, and may also be applied to a nozzle contact surface of an integrated sprue bush in which the sprue bush main body and the bush component are not separated. More specifically, in a sprue bush that is attached to a mold used to mold synthetic resin and includes a nozzle contact surface that is contacted by an injection molding nozzle and a flow passage extending from an opening in the nozzle contact surface, through which synthetic resin injected from the injection molding nozzle flows, the nozzle contact surface is a depressed surface that curves in a circular shape and is formed with a plurality of concavo-convex surfaces.

The concavo-convex surfaces provided on the nozzle contact surface 21 are not limited to the concentric circle-shaped surface shape illustrated in Figs. 15A-15D and 16, and the concavo-convex surfaces may take any form as long as spaces where the injection molding nozzle and the nozzle contact surface 21 do not contact each other are formed between a plurality of contacting parts on a contact surface between the injection molding nozzle and the nozzle contact surface 21. For example, projections and recesses may be formed to extend radially in the circumferential direction, or concavo-convex surfaces may be formed by providing projections intermittently over the entire surface of the nozzle contact surface 21. The concavo-convex surfaces formed as a plurality of concentric circle-shaped steps, illustrated in Figs. 15 and 16, are useful for positioning the injection molding nozzle reliably. Moreover, the concavo-convex surfaces can be machined comparatively easily, and exhibit a superior heat radiation effect.

In a further embodiment of the sprue bush, the sprue bush constituted by the sprue bush main body and the bush component is formed integrally as a single component, rather than by combining these two components. The sprue bush having the above configuration, in which a hollow region is formed in the interior thereof, can be formed integrally using a so-called stereolithography technique. More specifically, a sprue bush that is attached to a mold used to mold synthetic resin includes a nozzle contact surface that is contacted by an injection molding nozzle, and a flow passage extending from an opening in the nozzle contact surface, through which synthetic resin injected from the injection molding nozzle flows, wherein a hollow region surrounding the flow passage is formed in an interior region on a rear surface side of the nozzle contact surface, and a plurality of ribs are provided to extend radially outward from an inner peripheral surface of the through hole. Even more specifically, a sprue bush that is attached to a mold used to mold synthetic resin is formed by coaxially integrating a disc-shaped head and a columnar shaft having a smaller diameter than the head, a flow passage through which synthetic resin injected from an injection molding nozzle flows being formed in an axial center that extends from the head to the shaft, the head including a nozzle contact surface that is contacted by an injection molding nozzle and includes an opening into the flow passage, a hollow region formed in the interior of the head on a rear surface side of the nozzle contact surface so as to surround the flow passage in a ring shape, and a plurality of ribs extending radially toward the hollow region from a peripheral surface of the flow passage.

### REFERENCE SIGNS LIST

- 10: Sprue bush main body
- 10a: Head
- 10a-1: Ring-shaped portion
- 10b: Shaft
- 11: Sprue
- 12: Screw hole
- 13: Recessed portion
- 20: Bush component
- 21: Nozzle contact surface
- 21a: Opening
- 21b: Flange
- 22: Through hole (part of the sprue)
- 22a: Pipe-shaped portion
- 23: Rib
- 23a: Collar
- 24: Ring-shaped rib
- 30: Injection molding nozzle

## Claims

1. A sprue bush attached to a mold used to mold synthetic resin, the sprue bush comprising:
a sprue bush main body (10) that has a flow passage, through which synthetic resin injected from an injection molding nozzle flows, and a recessed portion (13) formed in a surface of the sprue bush main body (10) on a synthetic resin injection port side thereof; and
a bush component (20) that is embedded in the recessed portion (13),
the bush component (20) including:
a nozzle contact surface that is contacted by the injection molding nozzle;
a through hole (22) that extends from an opening in the nozzle contact surface and communicates with the flow passage in the sprue bush main body (10) so as to form the flow passage for the synthetic resin; and
a plurality of ribs (23) that extend radially outward from a peripheral surface of the through hole, **characterised in that** the bush component (20) includes a ring-shaped rib (24) that intersects the ribs (23) and surrounds an outer periphery of the through hole (22).

2. The sprue bush according to claim 1, wherein respective upper ends of the ribs (23) are joined to a rear surface of the nozzle contact surface, and respective lower ends of the ribs contact a bottom of the recessed portion (13).

3. The sprue bush according to claim 1 or 2, wherein the ribs (23) are formed at equal intervals in a circumferential direction.

4. The sprue bush according to any one of claims 1 to 3, wherein the nozzle contact surface is a depressed surface that curves in a circular shape and has a concavo-convex surface formed thereon, wherein the concavo-convex surface of the nozzle contact surface is formed of a plurality of concentric circle-shaped steps.

## Patentansprüche

1. Angussbuchse, die an einer Form angebracht ist, welche zum Gießen von Kunstharz verwendet wird, wobei die Angussbuchse umfasst:
- einen Angussbuchsen-Hauptkörper (10), der einen Durchflusskanal aufweist, durch den von einer Spritzgießdüse eingespritztes Kunstharz fließt, und einen ausgesparten Abschnitt (13), der in einer Oberfläche des Angussbuchsen-Hauptkörpers (10) auf einer Kunstharz-Einspritzöffnungsseite davon ausgebildet ist; und
- eine Buchsenkomponente (20), die in dem ausgesparten Abschnitt (13) eingebettet ist,
wobei die Buchsenkomponente (20) umfasst:
- eine Düsenkontaktfläche, die von der Spritzgießdüse kontaktiert wird;
- ein Durchgangsloch (22), das sich von einer Öffnung in der Düsenkontaktfläche aus erstreckt und unter Ausbildung eines Durchflusskanals für das Kunstharz mit dem Durchflusskanal in dem Angussbuchsen-Hauptkörper (10) in Verbindung steht;
- eine Vielzahl von Rippen (23), die sich von einer Umfangsfläche des Durchgangslochs radial nach außen erstrecken,
**dadurch gekennzeichnet, dass**
die Buchsenkomponente (20) eine ringförmige Rippe (24) umfasst, die die Rippen (23) schneidet und einen Außenumfang des Durchgangslochs (22) umgibt.

2. Angussbuchse nach Anspruch 1, wobei die jeweiligen oberen Enden der Rippen (23) mit einer hinteren Fläche der Düsenkontaktfläche verbunden sind und die jeweiligen unteren Enden der Rippen einen Boden des ausgesparten Abschnitts (13) kontaktieren.

3. Angussbuchse nach Anspruch 1 oder 2, wobei die Rippen (23) in gleichen Abständen in einer Umfangsrichtung ausgebildet sind.

4. Angussbuchse nach einem der Ansprüche 1 bis 3, wobei die Düsenkontaktfläche eine vertiefte Fläche ist, die kreisförmig gekrümmt ist und eine darauf ausgebildete konkav-konvexe Fläche aufweist, wobei die konkav-konvexe Fläche der Düsenkontaktfläche aus einer Vielzahl von konzentrischen kreisförmigen Stufen gebildet ist.

## Revendications

1. Douille de carotte, qui est fixée à un moule utilisé pour mouler de la résine synthétique, la douille de carotte comprenant :
- un corps principal de douille de carotte (10) ayant un passage d'écoulement, à travers lequel s'écoule la résine synthétique injectée par une douille de moulage par injection, et une partie évidée (13) formée dans une surface du corps principal de douille de carotte (10) sur un côté de l'orifice d'injection de résine synthétique de celui-ci ; et
- un élément de douille (20), qui est encastré dans la partie évidée (13), l'élément de douille (20) comprenant :
- une surface de contact de buse, qui est contactée par la buse de moulage par injection ;
- un trou traversant (22), qui s'étend depuis une ouverture dans la surface de contact de buse et communique avec le passage d'écoulement dans le corps principal de douille de carotte (10) de manière à former le passage d'écoulement pour la résine synthétique ; et
- une pluralité de nervures (23), qui s'étendent radialement vers l'extérieur à partir d'une surface périphérique du trou traversant,
**caractérisée en ce que**
l'élément de douille (20) comprend une nervure annulaire (24), qui coupe les nervures (23) et entoure une périphérie extérieure du trou traversant (22).

2. Douille de carotte selon la revendication 1, dans laquelle les extrémités supérieures respectives des nervures (23) sont reliées à une surface arrière de la surface de contact de buse, et les extrémités inférieures respectives des nervures contactent un fond de la partie évidée (13).

3. Douille de carotte selon la revendication 1 ou 2, dans laquelle les nervures (23) sont formées à intervalles égaux dans une direction circonférentielle.

4. Douille de carotte selon l'une des revendications 1 à 3, dans laquelle la surface de contact de buse est une surface déprimée, qui s'incurve de manière circulaire et qui a une surface concavo-convexe formée sur celle-ci, dans laquelle la surface concavo-convexe de la surface de contact de buse est formée d'une pluralité de marches concentriques en forme de cercle.
